# EUROPEAN PATENT APPLICATION

(11) **EP 2 565 977 A1**
(43) Date of publication of application: **06.03.2013**
(21) Application number: 11360042.3
(22) Date of filing: 29.08.2011
(51) Int. Cl.: H01M 10/50

(54) **Battery cooling**

(71) Applicant: Alcatel Lucent, 75007 Paris (FR)
(72) Inventor: Hernon, Domhnaill, Bettystown Co Meath (IE); Taheny, Oliver, Galway Co. Galway (IE); McGarry, Liam, Coill Fada Longwood Co Meath (IE)
(74) Representative: Script IP Limited

(57) **Abstract**

A battery thermal management device and method. The device comprises: a thermally conductive structure and a thermoelectric module. The thermally conductive structure is coupleable to a battery and operable to provide a thermal path between the battery and the thermoelectric module. The thermoelectric module is operable to transfer heat between itself and the thermally conductive structure thereby maintaining temperature of said battery within a predetermined range. Such a device can allow battery temperature management in an industrial deployment without requiring use of a battery enclosure and active cooling mechanisms.

## Description

### FIELD OF THE INVENTION

The present invention relates to a battery thermal management device.

### BACKGROUND

It will be appreciated that batteries have an optimum operating temperature. Batteries are often deployed in industrial environments comprising further electronic components which may serve to heat or cool an ambient environment surrounding batteries and those components. Operation of batteries within a preferred temperature window; for example, 20-25°C, may assist with long term maintenance of battery performance and efficiency, and ensures that stated battery design lifetime can be met. Operating batteries above or below a battery manufacturer approved range may reduce operational efficiency and may significantly reduce the lifespan of such a battery, leading to equipment failure and potentially significant maintenance costs.

It is desired to provide a means of addressing issues with known battery thermal management apparatus.

### SUMMARY

Accordingly, a first aspect provides a battery thermal management device comprising: a thermally conductive structure coupleable to a battery and operable to provide a thermal path between the battery and a thermoelectric module; the thermoelectric module being operable to transfer heat between itself and the thermally conductive structure to maintain temperature of the battery within a predetermined range.

One possible solution to optimizing operating temperature of batteries is to provide the batteries with their own enclosure, thus separating the batteries from the surrounding environment. That physical separation of batteries from the surrounding environment, whilst having advantages, also has associated difficulties. In such an arrangement, for example, a thermoelectric module (for example, a thermoelectric cooler), may be employed to cool air within the enclosure. The thermoelectric cooler cools air in direct contact with a cold plate and a fan is employed to push that air around batteries within the enclosure. Enclosing batteries may, however, be dangerous, since natural degassing processes are hindered. If the natural degassing process is overly hindered and insufficient ventilation is provided, hydrogen may accumulate around the batteries and pose severe health and safety issues. In a worst case scenario, that build-up of hydrogen may lead to explosions if exposed to an ignition source.

Use of air as a cooling medium in such solutions may be particularly inefficient and the pushing of that cool air over batteries within an enclosure typically occurs by use of fans. Fans inevitably have moving parts and tend to be unreliable, particularly when exposed to elevated temperatures. The failure of cooling solutions involving movement of cold air via fans is thus likely and maintenance and repair of such solutions can prove costly.

Furthermore, it will be appreciated that encased batteries may be particularly large, dependent upon the battery application, and installation and maintenance costs for large industrial sites for use in the event of power failures can be particularly large.

In large industrial deployments batteries may be provided in an area which is also provided with various electronic and other equipment. Components of that equipment typically each have an optimum working temperature. For example, in a telecommunications base station, general cooling of an equipment area may occur either by arrangement of appropriate air entry and exit points, associated with appropriate fans, and/or by use of appropriate air conditioning. Within an area provided with various telecommunications equipment and batteries, batteries may have an maximum operational temperature in the region of 28°C as, for example, dictated by a manufacturer, whereas telecoms electronic equipment may successfully operate at a higher temperature. Provision of a separate housing for batteries or any equipment operating at a significantly different temperature may be considered to offer a solution which can negate the need for provision of constant air conditioning, thereby saving a degree of electrical consumption within such an industrial equipment environment.

in overview, the first aspect allows for removal of an external housing or enclosure and negates a need to use fans. Such active components are replaced with predominantly passive components such as heat pipes and thermoelectric modules as described in more detail with reference to further embodiments, to provide a battery cooling and heating solution thus offering thermal stabilisation to battery operation in an industrial battery deployment. It is believed that embodiments offer a solution which can be inexpensive, lightweight, reliable and which may be retro fitted to battery deployments in industrial environments. Although described in relation to macro batteries, for example, those used in industrial back up power plants, it will be appreciated that concepts and principles described may be used in consumer battery scenarios as appropriate. It will be appreciated that the first aspect may provide a thermal management to macro batteries, the rechargeable batteries, and to consumer batteries. Those batteries may, for example, be lead acid batteries, lithium ion batteries, or any batteries having similar characteristics.

The first aspect provides, with appropriate choice of components, a means of providing a substantially passive means of heat extraction and heat transfer, thereby reducing power consumption expended in comparison to an active thermal management solution. It will be appreciated that the supply of power to thermoelectric modules may be considered an active step, but that the heat transfer is substantially passive.

According to one embodiment, the thermally conductive structure is arrangeable adjacent to at least a part of a surface of the battery. Accordingly, by arranging the thermally conductive structure adjacent to at least a part, or substantially the entire surface of a battery, heat transfer can be directed to precisely where it is required, ensuring that operation of the battery is optimised.

According to one embodiment, the thermally conducive structure is coupleable to the battery via a thermally conductive paste. Accordingly, it will be appreciated that the structure may be thermally coupled to the battery in a number of ways. There may be a direct physical connection, it may be placed adjacent to the surface, or may be affixed by means of a thermally conductive paste, direct contact, or other similar means. In each case thermal transfer between the battery and structure may be optimised.

According to one embodiment, the thermally conductive structure is operable to spread thermal load across at least part of a surface of the battery. Accordingly, by spreading thermal load across at least a portion of a battery surface, thermal management of the battery may be more efficiently implemented, since heat transfer may be effected across a greater surface area. Accordingly, a greater battery temperature stability may be achieved. The structure may, in some embodiments, be a heat spreader. According to one embodiment, the thermally conductive structure comprises at least one thermally conductive plate arranged adjacent to at least a part of a surface of the battery. That thermally conductive plate may comprise a substantially planar metallic sheet. According to further embodiments, heat pipes or shunts may be appropriately dimensioned to negate a need for a separate heat spreader plate. That is to say, heat pipes may be placed in contact with at least a part of the surface of the battery for heat load transfer.

According to one embodiment, the thermally conductive plate is coupled to the thermoelectric module. By directly coupling or connecting a heat spreader to a thermoelectric module, thermal stability of batteries may be more efficiently implemented. According to one embodiment, the coupling between the thermally conductive plate and the thermoelectric module comprises a direct connection. It will be appreciated that according to some embodiments connections and thermal coupling may be made between components using thermally conductive paste or similar.

According to one embodiment, the coupling between the thermally conductive plate and the thermoelectric module comprises at least one heat pipe operable to provide a heat path between the conductive plate and the thermoelectric module. Use of heat pipes provides an efficient passive means of transferring heat within a temperature management device.

According to one embodiment, the thermally conductive structure comprises at least one heat pipe which provides the thermal path between the battery and the thermoelectric module.

According to one embodiment, a heat sink is coupled with the thermoelectric module and operable to dissipate heat. Accordingly, heat dissipation from the device may bye optimised.

According to one embodiment, the coupling between the heat sink and the thermoelectric module comprises a heat shunt or pipe operable to provide a thermal path between the thermoelectric module and the heat sink.

According to one embodiment, the device comprises a retrofit module for installation between adjacent batteries. Provision of a modular device allows implementation of a thermal management solution which is flexible across battery deployments.

According to one embodiment, the device is integrally formed with at least one battery. Accordingly, a battery or batteries may be manufactured to include a device according to embodiments.

According to one embodiment, the device further comprises feedback control logic, operable to monitor battery temperature and compare that temperature with said predetermined range. If it is determined that the battery temperature lies outside said predetermined range, operational temperature of the thermoelectric module may be adjusted according to a predetermined increment. The effect of that incremental change may be monitored to see whether further temperature changes are required to stabilise the battery operating temperature within the predetermined range. According to some embodiments, ambient environment temperature may be monitored and taken into account in the feedback logic unit. Furthermore, in an industrial deployment, it will be appreciated that the battery feedback thermal monitoring unit may form part of a larger industrial thermal control unit.

A second aspect provides a method of thermally managing a battery comprising: providing a thermally conductive structure coupleable to a battery and operable to provide a thermal path between the battery and a thermoelectric module; providing a thermoelectric module arranged to transfer heat between itself and the thermally conductive structure to maintain termperature of the battery within a predetermined range.

According to one embodiment, the thermally conductive structure is arranged adjacent to at least a part of a surface of the battery.

According to one embodiment, the thermally conducive structure is coupled to the battery via a thermally conductive paste.

According to one embodiment, the thermally conductive structure is arranged to spread heat load across at least part of a surface of the battery.

According to one embodiment, the thermally conductive structure comprises at least one thermally conductive plate arranged adjacent to at least a part of a surface of the battery.

According to one embodiment, the thermally conductive plate is coupled to the thermoelectric module.

According to one embodiment, the coupling between the thermally conductive plate and the thermoelectric module comprises a direct connection.

According to one embodiment, the coupling between the thermally conductive plate and the thermoelectric module comprises at least one heat pipe arranged to provide a heat path between the conductive plate and the thermoelectric module.

According to one embodiment, the thermally conductive structure comprises at least one heat pipe arranged to provide the thermal path between the battery and the thermoelectric module.

According to one embodiment, the method comprises coupling a heat sink with the thermoelectric module and operable to dissipate heat.

According to one embodiment, the coupling between the heat sink and the thermoelectric module comprises a heat shunt or pipe arranged to provide a thermal path between the thermoelectric module and the heat sink.

According to one embodiment, the method comprises retrofitting the device as a module between adjacent batteries.

According to one embodiment, the method comprises integrally forming the device with at least one battery.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates schematically main components of a heat pipe for use in embodiments;
Figure 2 illustrates schematically main components of a thermoelectric module for use in embodiments;
Figure 3 is an exploded perspective view of a battery temperature management solution according to one embodiment;
Figure 4 is an exploded perspective view of a battery temperature management solution according to one embodiment;
Figure 5 is an exploded perspective view of a battery temperature management solution according to one embodiment; and
Figure 6 is an exploded perspective view of a battery temperature management solution according to one embodiment.

### DESCRIPTION OF THE EMBODIMENTS

In overview, embodiments provide a battery temperature management assembly which does not require a physical enclosure surrounding batteries, and does not require use of fans to move air around batteries or to remove heat from a heat sink. Embodiments provide a passive heat management system comprising heat pipes and thermoelectric modules, thereby providing an inexpensive, lightweight, reliable and potentially modular heat management assembly which may be retro fitted to existing battery deployments.

It will be appreciated that batteries have an optimum operating temperature. Batteries are often deployed in industrial environments comprising further electronic components which may serve to heat or cool an ambient environment surrounding batteries and those components. Operation of batteries within a preferred temperature window; for example, 20-25°C, may assist with long term maintenance of battery performance and efficiency, and ensures that stated battery design lifetime can be met. Operating batteries significantly above or below a predetermined optimum temperature; for example, 25°C, may significantly reduce the lifespan of such a battery, leading to equipment failure and potentially significant maintenance costs.

Embodiments described herein predominantly use passive components such as heat pipes and thermoelectric modules to provide a battery cooling and/or heating solution. The use of passive components may be less expensive, weigh less and be more reliable than solutions relying on external battery housing. Passive component systems may also negate a need for use of fans or air conditioning to provide temperature stabilisation to battery units. Moreover, a passive component system may also be retro fitted to battery deployments in industrial environments.

Before discussing the assembly in detail, an explanation will first be given of some of the main components of the assembly.

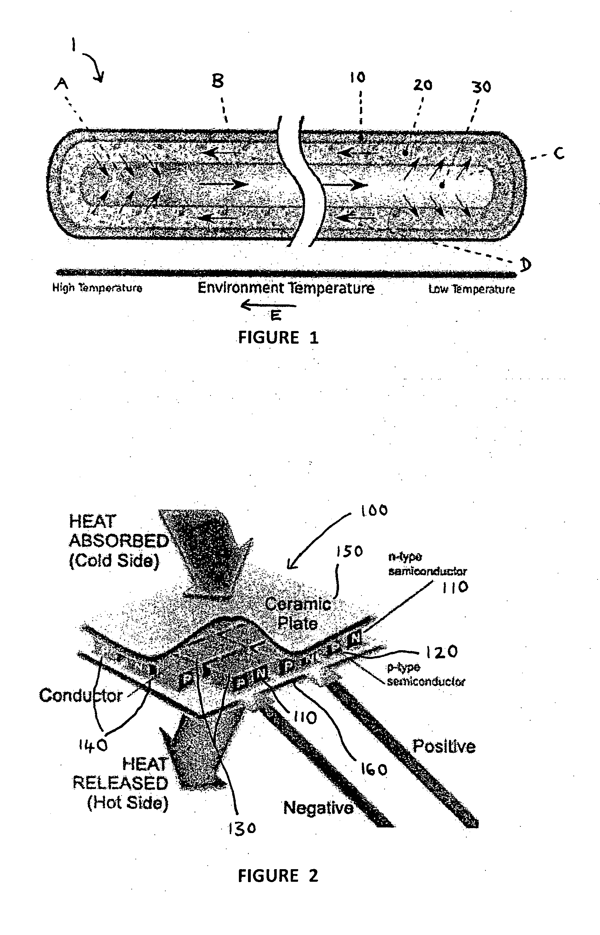

Figure 1 illustrates schematically an example of a heat pipe which transports and transfers heat from a heat source. The heat pipe 1 comprises a casing 10 which surrounds a wick 20 which in turn, surrounds a vapour cavity 30.

A heat pipe thermal cycle occurs as follows: At point A at a high temperature, working fluid evaporates to vapour, thus absorbing thermal energy. At point B the vapour migrates along the vapour cavity 30 towards a lower temperature end. There is a temperature gradient in the direction of arrow E in Figure 1. At point C in the heat pipe thermal cycle, vapour condenses back to a fluid and is absorbed by wick 20, thereby releasing thermal energy. As indicated by arrows at point D, the working fluid then flows back towards the high temperature end. It will be appreciated that heat pipes efficiently transfer heat energy from regions of heat to a region of cooler temperature without the requirement to actively pump or move the working fluid. Vapour condenses releasing thermal energy and is then absorbed by the wick structure 20, and can return to the evaporative end of the heat pipe structure.

Figure 2 illustrates schematically an arrangement of a thermoelectric module 100. The structure of the thermoelectric module (TEM) 100 is such that it includes n-doped pellets 110 and p-doped pellets 120. Pellets 110, 120 are connected by sets of electrodes 130 and 140. The pellets 110, 120 and electrodes 130, 140 are configured to be electrically in series and thermally in parallel. Upper and lower substrates 150, 160 serve to electrically isolate the thermoelectric module from an object with which the thermoelectric module 100 is placed in thermal contact, and to provide mechanical strength. The substrates 150, 160 may be formed from an electrically insulating ceramic with a sufficiently high thermal conductivity such as, for example, Alumina, aluminium nitride or beryllia.

The efficiency of heat transfer by the thermoelectric module decreases with increasing heat flux across the pellets 110, 120. By applying a voltage potential across the semiconductors, substrates 150, 160 become either hot or cold. In the illustrated example, plate 150 is the cold side and absorbs heat, and plate 160 is the hot side and releases heat. That is to say, the thermoelectric module can act as a heat pump.

A thermoelectric module such as that illustrated in Figure 2 can provide controlled heating or cooling on the condenser or evaporator end of a heat pipe such as that illustrated in Figure 1. It will be appreciated that low power loads, compared to those loads used to drive fans or electric air conditioning units, can be required to drive the thermoelectric module of Figure 2 since a temperature difference of only a few degrees between ends of a heat pipe can allow efficient heat pipe operation.

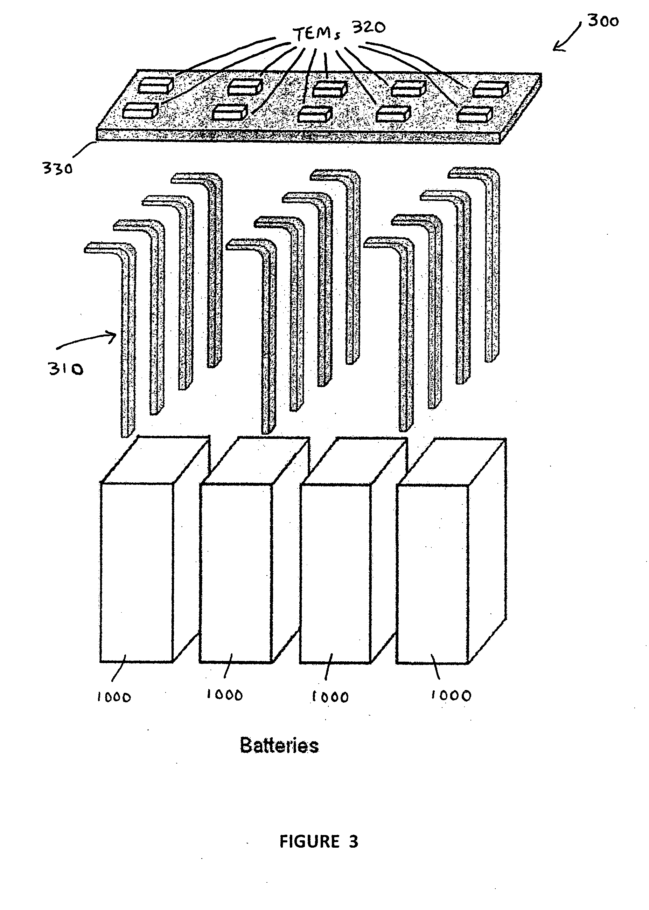

Figure 3 is an exploded perspective view of a battery thermal management solution according to one embodiment. Batteries 1000 may be cooled passively by a battery cooling assembly 300 comprising heat pipes 310 and thermoelectric modules 320 mounted on a support plate 330. According to the embodiment shown in Figure 3, heat pipes 310 are arranged to fit between and adjacent to batteries 1000. Those heat pipes may directly contact the batteries thereby removing a heat load from the batteries. Heat load is transported via heat pipes 310 to the thermoelectric modules 320 mounted on support plate 330. It will be appreciated that heat pipes 310 are also mounted on support plate 330, but that the exploded perspective view of Figure 3 is such that the connection is not shown.

Such a battery cooling solution may provide both heating and cooling of batteries 1000 at a relatively low power cost. The cooling offered by cooling assembly 300 is substantially passive. It will be appreciated that the thermoelectric modules may be connected to a voltage source and that temperature sensors may be provided on the batteries and connected into a feedback electronic loop also connected to the thermoelectric modules to ensure that battery temperature is maintained at a substantially constant value. Furthermore, it will be appreciated that a heat sink may be provided attached to the thermoelectric module and support plate such that heat loads from the thermoelectric module can be dissipated to ambient air. Such an assembly can act to cool batteries if the outside temperature is high and heat batteries if the ambient temperature is determined to be too low.

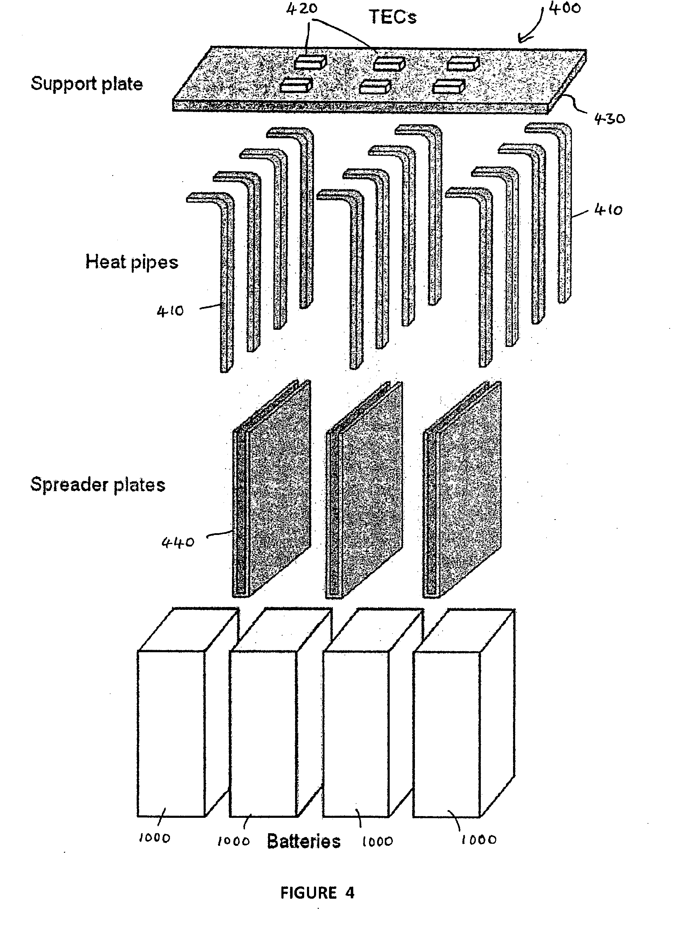

Figure 4 is an exploded perspective view of a battery cooling assembly according to a further embodiment. Battery cooling assembly 400 comprises generally heat pipes 410, thermoelectric modules 420 supported on a support plate 430 and spreader plates 440. In the embodiment shown in Figure 4, spreader plates 440 are placed between and in contact with batteries 1000. Those spreader plates are made from a thermally conductive material and act to remove heat load from the batteries and spread that heat load evenly across the spreader plates. Heat pipes 410 are sandwiched within the spreader plates and are operable to transfer heat load from the spreader plates to the thermoelectric modules above. The thermoelectric module generates a cold side temperature that causes heat at the thermoelectric module side of each heat pipe to condense, thus releasing its heat energy and controlling the temperature of the batteries 1000. Heat load from the thermoelectric modules may be dissipated to the air by means of a heat sink (not shown). Such an embodiment may act to cool batteries if outside temperature is high, and heat batteries if outside temperature is low, by provision of a feedback circuit and appropriate monitoring sensors provided at batteries and/or in the region of thermoelectric modules 420. It will be appreciated that provision of the spreader plates allows for an increased surface area for heat transfer from and to batteries 1000.

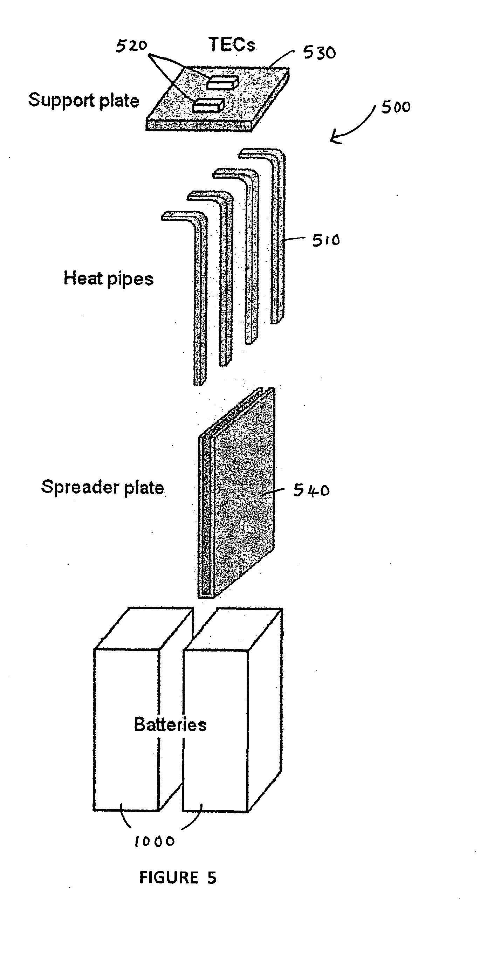

Figure 5 is an exploded perspective view of a battery cooling assembly according to a further embodiment. The battery cooling assembly 500 comprises spreader plates 540, heat pipes 510 and thermoelectric modules 520 mounted on a support plate 530. The embodiment shown in Figure 5 is modular and flexible and thus offers robustness to many variations of battery deployment in the field. Again, the basic idea is that the spreader plates, which are thermally conductive and, for example, made of metal, may be placed between and in contact with batteries 1000. Those spreader plates are operable to remove heat load from batteries and spread that heat load across the spreader plates. Heat pipes 510 are then sandwiched between the spreader plates and are operable to transfer heat load from those spreader plates 540 to the thermoelectric modules provided on support plate 530.

It will be appreciated that although Figure 5 shows deployment such that the thermoelectric modules are provided on the top of batteries, they could also be provided on a front plate, arranged to slot between adjacent batteries horizontally rather than vertically.

As described previously, the thermoelectric module is operable to generate a cold side temperature that causes the heat at the thermoelectric module side of heat pipes to condense, thus giving off its heat. In such a way, the temperature of the batteries may be controlled. The heat load from each thermoelectric module may be dissipated to the air via a heat sink (not shown in the Figure for clarity).

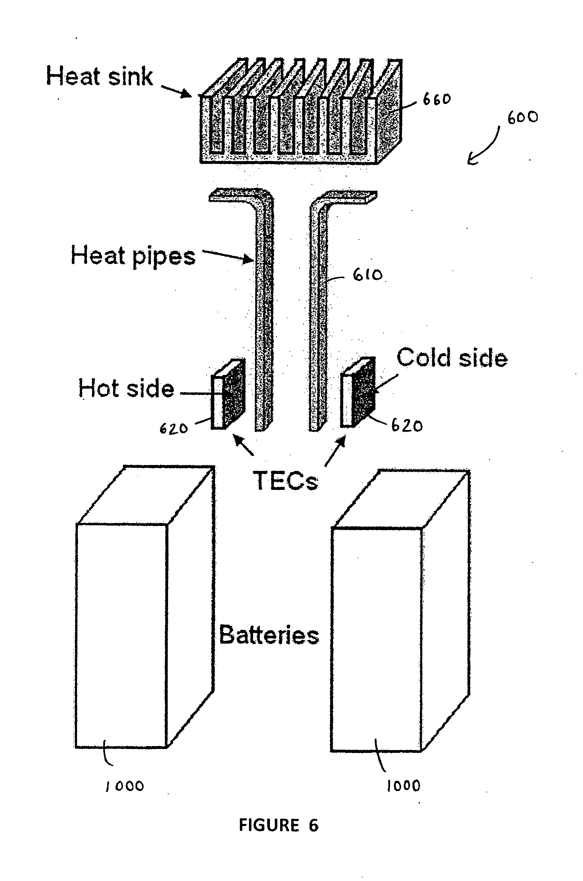

Figure 6 is an exploded perspective view of a battery cooling assembly according to a further embodiment. Battery cooling assembly 600 comprises thermoelectric modules 620, heat pipes 610 and a heat sink 660. In this embodiment, thermoelectric modules 620 are arranged between batteries 1000. Heat spreaders are provided that have been removed from Figure 6 for clarity. In the solution shown in Figure 6, thermoelectric modules are provided such that their cold side contacts spreader plates, thereby cooling them. Those spreader plates transfer the cold temperature to the batteries and thereby act to regulate temperature of the batteries. One particular benefit of an arrangement according to Figure 6 is that a hot side of a thermoelectric module is provided in direct contact with heat pipes 610, thereby improving efficiency of heat pipe operation to transport heat. Heat transferred by heat pipes 610 from the batteries via thermoelectric modules 620 is dissipated to the air via heat sink 660.

The embodiments shown in Figure 6 may provide good temperature control at a hot surface of batteries 1000. It will be appreciated that the embodiment of Figure 6 offers a means of temperature control rather than significant heat dissipation. Heat pipes 610 are operable to control the temperature of batteries 1000. The heat load from each thermoelectric module hot side is dissipated to the ambient air via a condenser section of heat pipes 610.

It will be appreciated that the embodiment illustrated in Figure 6 may also operate to heat the batteries, as has been described previously in relation to other embodiments.

It will be appreciated that embodiments described relate to generally passive systems which have no moving parts and thus offer a low maintenance or no maintenance cooling solution for batteries deployed in an industrial environment. Modular solutions such as those shown in Figures 5 and 6 offer a relative plug-and-play capability and the ability to retro fit to existing battery deployments. Heat pipes at thermoelectric modules offer large heat transfer capability and an opportunity for good thermal uniformity whilst only using a low parasitic power as a result of low power requirements of thermoelectric modules.

Embodiments reduce the possibility of thermal runaway and are operable to heat batteries in reduced ambient conditions, thereby offering temperature stabilization apparatus. Furthermore, in contrast to known solutions, batteries are not enclosed and thus degassing of battery housing is no longer an issue. Embodiments provide a natural thermal isolation without the need for physical isolation.

Although embodiments of the present invention are described as separate retro fit devices, it will be appreciated that similar embodiments can be implemented if batteries and cooling apparatus are integrally formed.

Hence, it can be seen that an arrangement is provided in which cooling can be provided at extremely low cost in a highly reliable modular manner and which does not affect normal operation of battery deployments. Such arrangements do not significantly affect safety of batteries, or require high maintenance, unlike standard solutions which enclose the batteries thereby promoting the possibility of catastrophic failure and enabling a build-up of hydrogen.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended to expressly be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects and embodiments of the invention, as well as specific examples thereof, are intended to encompass equivalents thereof.

## Claims

1. A battery thermal management device comprising: a thermally conductive structure coupleable to a battery and operable to provide a thermal path between said battery and a thermoelectric module;
said thermoelectric module being operable to transfer heat between itself and said thermally conductive structure to maintain temperature of said battery within a predetermined range.

2. A battery thermal management device according to claim 1, wherein said thermally conductive structure is arrangeable adjacent to at least a part of a surface of said battery.

3. A battery thermal management device according to claim 1 or claim 2, wherein said thermally conducive structure is coupleable to said battery via a thermally conductive paste.

4. A battery thermal management device according to any preceding claim, wherein said thermally conductive structure is operable to spread thermal load across at least part of a surface of said battery.

5. A battery thermal management device according to any preceding claim, wherein said thermally conductive structure comprises at least one thermally conductive plate arranged adjacent to at least a part of a surface of said battery.

6. A battery thermal management device according to claim 5, wherein said thermally conductive plate is coupled to said thermoelectric module.

7. A battery thermal management device according to claim 6, wherein said coupling between said thermally conductive plate and said thermoelectric module comprises a direct connection.

8. A battery thermal management device according to claim 7, wherein said coupling between said thermally conductive plate and said thermoelectric module comprises at least one heat pipe operable to provide a heat path between said conductive plate and said thermoelectric module.

9. A battery thermal management device according to any preceding claim, wherein said thermally conductive structure comprises at least one heat pipe which provides said thermal path between said battery and said thermoelectric module.

10. A battery thermal management device according to any preceding claim, comprising a heat sink coupled with said thermoelectric module and operable to dissipate heat.

11. A battery thermal management device according to claim 10, wherein said coupling between said heat sink and said thermoelectric module comprises a heat shunt/pipe operable to provide a thermal path between said thermoelectric module and said heat sink.

12. A battery thermal management device according to any preceding claim, comprising a retrofit module for installation between adjacent batteries.

13. A battery thermal management device according to any one of claims 1 to 12, integrally formed with at least one battery.

14. A method of thermally managing a battery comprising:
providing a thermally conductive structure coupleable to a battery and
operable to provide a thermal path between said battery and a thermoelectric module;
providing a thermoelectric module arranged to transfer heat between itself and said thermally conductive structure to maintain temperature of said battery within a predetermined range.
